# EUROPEAN PATENT APPLICATION

(11) **EP 4 481 838 A1**
(43) Date of publication of application: **25.12.2024**
(21) Application number: 22927229.9
(22) Date of filing: 23.06.2022
(51) Int. Cl.: H01M 4/04, C09D 5/02, C09D 5/24, C09D 7/61, C09D 7/63, C09D 129/04, H01G 11/28, H01M 4/139, H01M 4/66

(54) **AQUEOUS COATING LIQUID, ELECTRODE FOR ELECTRICITY STORAGE DEVICE, AND ELECTRICITY STORAGE DEVICE**

(30) Priority: 17.02.2022 JP 2022022850
(71) Applicant: DAINICHISEIKA COLOR & CHEMICALS MFG. CO., LTD., Chuo-ku Tokyo 103-8383 (JP)
(72) Inventor: HAYASHI, Takayuki, Tokyo 103-8383 (JP); KOBAYASHI, Nobuyuki, Tokyo 103-8383 (JP)
(74) Representative: Wächtershäuser & Hartz Patentanwaltspartnerschaft mbB
(86) International application number: PCT/JP2022/025085
(87) International publication number: WO 2023/157331

(57) **Abstract**

There is provided an aqueous coating liquid having excellent storage stability and capable of forming a coating film with excellent water resistance. The aqueous coating liquid is an aqueous coating liquid for forming a coating film to be provided between a collector and an active material layer in an electrode for an electricity storage apparatus. This aqueous coating liquid contains: a water-based medium containing water; at least one polyvinyl alcohol (PVA)-based resin selected from the group consisting of unmodified polyvinyl alcohols and modified polyvinyl alcohols; an electrically conductive material; and 2-phosphonobutane-1,2,4-tricarboxylic acid (PBTC). In addition, the aqueous coating liquid satisfies a condition that the aqueous coating liquid is free of polyacrylic acid, or that even when the aqueous coating liquid contains polyacrylic acid, the content of polyacrylic acid is less than 9% by mass based on the total mass of the aqueous coating liquid. Further, the ratio of the content of the PVA-based resin in the aqueous coating liquid to the content of PBTC in the aqueous coating liquid is 2 to 100.

## Description

### Technical Field

The present invention relates to an aqueous coating liquid, an electrode for an electricity storage apparatus, and an electricity storage apparatus.

### Background Art

In recent years, electricity storage apparatuses such as secondary batteries including a lithium ion secondary battery and the like and capacitors (also referred to as condensers) including an electric double layer capacitor and the like have been widely used in the fields of electronic devices, telecommunication devices, electric vehicles, hybrid vehicles, and the like. In general, an electricity storage apparatus includes: electrodes including a positive electrode and a negative electrode; a separator; and an electrolytic solution containing an electrolyte.

The electrodes in an electricity storage apparatus give influences on the performance of the electricity storage apparatus, and therefore various proposals on an electrode for an electricity storage apparatus have been made so far. An electrode for an electricity storage apparatus includes: for example, a collector composed of a metal foil of aluminum, copper, or the like; and an active material layer provided on the collector. The active material layer is obtained by coating the collector with an electrode material slurry containing an active material, a binder resin, and a solvent, and drying the electrode material slurry.

On the other hand, a film may be provided between the collector and the active material layer in order to enhance the adhesion between the collector and the active material layer. Since this film is provided between the collector and the active material layer, the following are required for this film: reducing the internal resistance in order to realize an increase in capacity of an electricity storage apparatus and an increase in output from an electricity storage apparatus; and durability against organic solvents which can be contained in the above-described electrode material slurry and the above-described electrolyte. For example, in Patent Literatures 1 to 3, proposals have been made on a coating liquid capable of forming a film excellent in adhesion to metal materials such as a collector, solvent resistance, and electrical characteristics.

Patent Literature 1 discloses, as a coating liquid of one aspect, a coating liquid containing water, a given polyvinyl alcohol-based resin, an electrically conductive material, and a given polybasic acid each in a given amount. Further, Patent Literatures 2 and 3 each disclose, as a coating liquid of one aspect, a coating liquid containing water, a polyvinyl alcohol, polyacrylic acid, phosphonobutane tricarboxylic acid, and an electrically conductive material each in a given amount.

### Citation List

### Patent Literature

Patent Literature 1: International Publication No. WO 2011/024799
Patent Literature 2: International Publication No. WO 2012/114834
Patent Literature 3: International Publication No. WO 2014/030208

### Summary of Invention

### Technical Problem

In the above-described electrode material slurry for forming an active material layer, not only an organic solvent may be used but also water may be used in order to make the environmental impact of the slurry lower. Therefore, excellent water resistance may be required in the performance of a coating film using a coating liquid.

The present inventors have conducted studies on the above-described conventional coating liquids for the purpose of further improving the water resistance of the films. As a result, it has been found that when a coating liquid is formulated so that a film having excellent water resistance can be formed, the storage stability of the coating liquid is likely to be lowered.

Accordingly, an object of the present invention is to provide an aqueous coating liquid for forming a coating film to be provided between a collector and an active material layer in an electrode for an electricity storage apparatus, the aqueous coating liquid being capable of forming a coating film having excellent storage stability and excellent water resistance.

### Solution to Problem

According to the present invention, there is provided an aqueous coating liquid for forming a coating film to be provided between a collector and an active material layer in an electrode for an electricity storage apparatus, the aqueous coating liquid containing: a water-based medium containing water; at least one polyvinyl alcohol-based resin selected from the group consisting of unmodified polyvinyl alcohols and modified polyvinyl alcohols obtained by introducing a functional group other than a hydroxy group and an acetate group into an unmodified polyvinyl alcohol; an electrically conductive material; and 2-phosphonobutane-1,2,4-tricarboxylic acid, wherein
the aqueous coating liquid satisfies a condition that the aqueous coating liquid is free of polyacrylic acid, or that even when the aqueous coating liquid contains polyacrylic acid, the content of the polyacrylic acid is less than 9% by mass based on the total mass of the aqueous coating liquid, and
a ratio of the content of the polyvinyl alcohol-based resin in the aqueous coating liquid to the content of 2-phosphonobutane-1,2,4-tricarboxylic acid in the aqueous coating liquid is 2 to 100.

### Advantageous Effects of Invention

According to the present invention, it is possible to provide an aqueous coating liquid for forming a coating film to be provided between a collector and an active material layer in an electrode for an electricity storage apparatus, the aqueous coating liquid being capable of forming a coating film having excellent storage stability and excellent water resistance.

### Description of Embodiments

Hereinafter, embodiments of the present invention will be described, but the present invention is not limited to the following embodiments.

In the past, it has been known that polymers having a hydroxy group and/or an amino group in the molecule thereof are capable of forming a film having excellent adhesion to metal materials such as aluminum. Examples of such polymers include cellulose, starch, chitin, chitosan, alginic acid, polyvinyl alcohols, ethylene/vinyl alcohol copolymers, polyallylamines, and polyvinylamines. However, a film using any of the above-described polymers is likely to swollen by a polar solvent (such as, for example, water and N-methyl-2-pyrrolidone) contained in electrode material slurries for forming an active material layer in an electricity storage apparatus and tends to peel off from the surfaces of the metal materials. In addition, a film using any of the above-described polymers tends to have low durability against organic solvents (such as, for example, ethylene carbonate and propylene carbonate) which are used for electrolytic solutions for electricity storage apparatuses.

The present inventors have taken notice of low-environmental-impact polyvinyl alcohol-based resins (hereinafter, sometimes referred to as "PVA-based resins") among the above-described polymers and have conducted studies on the formulations of environmentally friendly water-based coating liquids for the purpose of improving the solvent resistance of the film. As a result, the present inventors have found that a coating liquid obtained by adding a PVA-based resin, an electrically conductive material, and 2-phosphonobutane-1,2,4-tricarboxylic acid (hereinafter, sometimes referred to as "PBTC") to a water-based medium is capable of forming a film having excellent adhesion to the surfaces of metal materials, excellent solvent resistance, and excellent electrical characteristics. In addition, the present inventors have found that when this coating liquid is applied and then heated to form a film, PBTC acts as a crosslinker for the PVA-based resin during the drying by heating to make the film hard to dissolve in organic solvents and hard to be swollen, so that the film can exhibit excellent adhesion to the surfaces of the metal materials and excellent solvent resistance. Accordingly, it has been found that the above-described coating liquid is useful as a material for forming a film to be provided between a collector and an active material layer in an electrode for an electricity storage apparatus.

On the other hand, a water-based slurry may be used because of environmental compatibility as an electrode material slurry to be used for forming an active material layer to be provided on a collector. In that case, having excellent water resistance is also desired for the film to be provided between the collector and the active material layer. The present inventors have further conducted studies on the coating liquid containing an aqueous medium, a PVA-based resin, an electrically conductive material, and PBTC for the purpose of improving water resistance of the film. As a result, it has been found that when PBTC is contained in a relatively large amount in the coating liquid under a condition that the coating liquid is free of polyacrylic acid, or a condition that even when polyacrylic acid is contained in the coating liquid, the amount of polyacrylic acid is controlled in a small amount, as small as less than 9% by mass based on the total mass of the coating liquid, a film having excellent water resistance can be formed, but on the other hand, it has also been found that the storage stability of the coating liquid is likely to be lowered.

Thus, the present inventors have further conducted studies on the formulations of the aqueous coating liquid capable of forming a coating film having excellent storage stability and excellent water resistance with regard to the aqueous coating liquid for forming a coating film to be provided between a collector and an active material layer in an electrode for an electricity storage apparatus. As a result, the present inventors have found that by setting the ratio of the content of the PVA-based resin to the content of PBTC in the aqueous coating liquid so as to fall within a particular range under the above-described condition, it is possible to form a coating film having excellent storage stability and excellent water resistance, and thus the present invention have been completed.

### <Aqueous Coating Liquid>

Specifically, an aqueous coating liquid of one embodiment of the present invention (hereinafter, sometimes simply referred to as "aqueous coating liquid") is an aqueous coating liquid for forming a coating film to be provided between a collector and an active material layer in an electrode for an electricity storage apparatus. This aqueous coating liquid contains: a water-based medium containing water; at least one polyvinyl alcohol-based resin selected from the group consisting of unmodified polyvinyl alcohols and modified polyvinyl alcohols obtained by introducing a functional group other than a hydroxy group and an acetate group into an unmodified polyvinyl alcohol; an electrically conductive material; and 2-phosphonobutane-1,2,4-tricarboxylic acid. In this aqueous coating liquid, the aqueous coating liquid satisfies a condition that the aqueous coating liquid is free of polyacrylic acid, or that even when the aqueous coating liquid contains polyacrylic acid, the content of the polyacrylic acid is less than 9% by mass based on the total mass of the aqueous coating liquid, and
a ratio of the content of the polyvinyl alcohol-based resin in the aqueous coating liquid to the content of 2-phosphonobutane-1,2,4-tricarboxylic acid in the aqueous coating liquid is 2 to 100.

This aqueous coating liquid is, as described above, useful for forming a coating film to be provided between a collector and an active material layer in an electrode for an electricity storage apparatus. The coating film using the aqueous coating liquid may be provided between a collector and an active material layer, and specifically, because of easiness of production, the coating film can preferably be formed by applying the aqueous coating liquid on the surface of the collector to dry the aqueous coating liquid. The aqueous coating liquid, when containing the above-described particular components, is capable of forming a coating film having excellent adhesion to the collector and excellent solvent resistance. In addition, when this coating film is used as an undercoat layer and an active material layer, such as a positive electrode active material layer or a negative electrode active material layer, is formed on the undercoat layer, thereby the adhesion between a collector (the coating film provided on the surface of the collector) and the active material layer can be made excellent, and the resistance can be lowered. Further, as described above, when the aqueous coating liquid satisfies the condition that the aqueous coating liquid is free of polyacrylic acid or that even when the aqueous coating liquid contains polyacrylic acid, the content of polyacrylic acid is less than 9% by mass based on the total mass of the aqueous coating liquid, and when the ratio of the content of the PVA-based resin to the content of PBTC is 2 to 100, thereby a coating film having excellent storage stability and excellent water resistance can be formed.

In addition, formation of a coating film to be provided between a collector and an active material layer using the aqueous coating liquid makes it possible to provide an electrode for an electricity storage apparatus, the electrode including the collector, the active material layer, and the coating film (undercoat layer) provided therebetween. Further, formation of a coating film to be provided between a collector and an active material layer using the aqueous coating liquid makes it possible to provide an electricity storage apparatus, such as a secondary battery and a capacitor, including the electrode for an electricity storage apparatus.

Hereinafter, the components of the aqueous coating liquid and the contents of the components, the coating film using the aqueous coating liquid, etc. will be described in detail.

### (Water-Based Medium)

The aqueous coating liquid contains a water-based medium containing water. The water-based medium contains at least water, which is a polar solvent, and may contain a polar solvent other than water. As the water-based medium, a polar solvent other than water does not have to be used, and accordingly, the ratio of water to the total mass of the water-based medium may be 100% by mass. The ratio of water to the total mass of the water-based medium is preferably 50% by mass or more, more preferably 70% by mass or more, still more preferably 80% by mass or more.

Examples of the polar solvent other than water include alcohols (such as methanol, ethanol, 1-propanol, 2-propanol, and 1-butanol), ethers (such as diethyl ether, diisopropyl ether, tetrahydrofuran, and 1,2-dioxane), carbonates (such as ethylene carbonate, ethyl methyl carbonate, diethyl carbonate, dimethyl carbonate, propylene carbonate, and butylene carbonate), amides (such as formamide, N-methylformamide, N-ethylformamide, N,N-dimethylformamide, N,N-diethylformamide, vinylformamide, vinylacetamide, acetamide, N-methylacetamide, N-ethylacetamide, N,N-dimethylacetamide, N,N-diethylacetamide, N-methyl-2-pyrrolidone, N-ethyl-2-pyrrolidone, vinylpyrrolidone, piperidone, N-methylpiperidone, N-ethylpiperidone, hexamethylphosphoric triamide, 1,3-dimethyl-2-imidazolidinone, methyloxazolidinone, and ethyloxazolidinone), sulfoxides (such as dimethyl sulfoxide), and sulfones (such as tetramethylene sulfone). The water-based medium may contain one, or two or more of the above-described polar solvents.

Among the polar solvents other than water, alcohols, such as methanol, ethanol, 1-propanol, and 2-propanol, and aprotic polar solvents, such as N,N-dimethylformamide, N,N-dimethylacetamide, N-methyl-2-pyrrolidone, N-ethyl-2-pyrrolidone, 1,3-dimethyl-2-imidazolidinone, and dimethyl sulfoxide, are preferable. These polar solvents may be used singly or may be mixed for use. Among others, the polar solvent other than water is more preferably one or more selected from the group consisting of methanol, ethanol, 1-propanol, 2-propanol, N-methyl-2-pyrrolidone, dimethyl sulfoxide, dimethylacetamide, and N,N-dimethylformamide. The above-described polar solvents can be commercially available products, and such commercially available products can be used as served but may be used after purification if necessary.

The content of the water-based medium in the aqueous coating liquid is preferably 50 to 95% by mass, more preferably 60 to 95% by mass, still more preferably 65 to 90% by mass, based on the total mass of the aqueous coating liquid.

### (PVA-Based Resin)

The aqueous coating liquid contains at least one polyvinyl alcohol (PVA)-based resin selected from the group consisting of unmodified polyvinyl alcohols (hereinafter, sometimes referred to as "unmodified PVAs") and modified polyvinyl alcohols (hereinafter, sometimes referred to as "modified PVAs") obtained by introducing a functional group other than a hydroxy group and an acetate group into an unmodified PVA. Thereby, low-environmental-impact aqueous coating liquid can be obtained. The PVA-based resin in the aqueous coating liquid acts as a binder for the electrically conductive material.

The aqueous coating liquid is used for forming a coating film to be provided between a collector and an active material layer in an electrode for an electricity storage apparatus. On the other hand, the active material layer is formed from an electrode material slurry containing an active material, a binder resin, solvent, and if necessary, a conductive assistant. Examples of the binder resin which is used for the active material layer include polyvinylidene fluoride, polytetrafluoroethylene, acrylic resins, polyimide resins, polyamide-imide resins, silicone acrylic resins, and styrene/butadiene copolymer rubber. In the past, when an electrode material slurry (active material layer) containing any of such binder resins is applied on a collector, the surface of the collector, such as an aluminum foil, has been subjected to, for example, chemical conversion treatment in order to improve adhesion to the collector. In contrast, when the aqueous coating liquid of the present embodiment is used, the chemical conversion treatment is unnecessary, and excellent adhesion between the collector and the active material layer as well as reduction of the resistance can be achieved, and as a result, providing an electricity storage apparatus with high efficiency and long-life charging/discharging cycles can be expected.

The unmodified PVA is a resin obtained by saponifying polyvinyl acetate. Accordingly, the unmodified PVA has a hydroxy group (-OH) and can have an acetate group (-O-C(=O)-CH₃) according to the degree of saponification. Commercially available unmodified PVAs can be used as the unmodified PVA. Examples of the trade names of the commercially available products include "Kuraray Poval" (manufactured by Kuraray Co., Ltd.), "GOHSENOL" (manufactured by Mitsubishi Chemical Corporation), "DENKA POVAL" (manufactured by Denka Company Limited), and "J-POVAL" (manufactured by JAPAN VAM&POVAL CO., LTD.).

The modified PVA is a resin obtained by introducing a functional group other than the hydroxy group and the acetate group into an unmodified PVA. Examples of the modified PVA include carboxylate group-modified PVAs, carbonyl group-modified PVAs, silanol group-modified PVAs, amino group-modified PVAs, cationic group (quaternary ammonium salt)-modified PVAs, sulfonate group-modified PVAs, and acetoacethyl group-modified PVAs. Commercially available modified PVAs can be used as the modified PVA. Examples of the trade names of the commercially available products include "GOHSENX L" (sulfonate group-modified PVA), "GOHSENX K" (cationic group-modified PVA), "GOHSENX Z" (acetoacetyl group-modified PVA), "GOHSENX T" (carboxylate group-modified PVA) (all manufactured by Mitsubishi Chemical Corporation), "D Polymers" (carbonyl group-modified PVAs), "A Series" (carboxylate group-modified PVAs) (all manufactured by JAPAN VAM&POVAL CO., LTD), and "Kuraray C Polymers" (cationic group-modified PVAs) (manufactured by Kuraray Co., Ltd.).

PVA is obtained by saponifying polyvinyl acetate which is obtained by polymerizing a vinyl acetate monomer and therefore can be represented by the formula: -(CH₂-C(OH)H)ₓ-(CH₂-C(OAc)H)_{y}- (Ac: acetyl group). The degree of saponification (100 × X/(X + Y)) of the PVA-based resin is preferably 40 mol% or more, more preferably 60 mol% or more, and still more preferably 70 mol% or more. Further, the average degree of polymerization (X + Y) of the PVA-based resin is preferably 300 to 5,000, more preferably 300 to 2,000, still more preferably 500 to 1,700. Herein, the degree of saponification and average degree of polymerization of the PVA-based resin are values as measured in accordance with the specifications in JIS K6726:1994.

The average molecular weight of the PVA-based resin, which is determined by (average degree of polymerization) × (formula weight of structural units of constituent monomers), is preferably 12,000 or higher, and is, from the viewpoint of suppressing a viscosity increase of the aqueous coating liquid, resulting in easiness of coating, preferably lower than 80,000, more preferably 79,000 or lower. The formula weight (chemical formula weight) of the structural units of the constituent monomers can be calculated using the formula weight of the structural unit of vinyl alcohol (C₂H₄O) (44.05256), the formula weight of the structural unit of vinyl acetate (C₄H₆O₂) (86.08924), and the degree of saponification. For example, the average molecular weight of a PVA-based resin with an average degree of polymerization of 1,700 and a degree of saponification of 99 mol% can be calculated as 1700 × (44.05256 × 0.99 + 86.08924 × 0.01) ≈ 75604 and can be determined to be about 75600 by rounding the calculated value to the tenth place. Note that herein, the average molecular weight of a modified PVA can be determined for convenience as the average molecular weight of an unmodified PVA before introducing the functional group, as described above. That is, the average molecular weight of an unmodified PVA can be determined as (average degree of polymerization) × (formula weight of structural units of constituent monomers) for the unmodified PVA. The average molecular weight of a modified PVA can be determined as the average molecular weight of an unmodified PVA before introducing the functional group to obtain the modified PVA. The formula weight of each of the structural units of vinyl alcohol (C₂H₄O) and vinyl acetate (C₄H₆O₂) can be derived from "formula mass" in software "ACD/ChemSketch" (Advanced Chemistry Development, Inc.).

The content of the PVA-based resin in the aqueous coating liquid is preferably 1 to 40% by mass based on the total mass of the aqueous coating liquid. When the content of the PVA-based resin is 1% by mass or more, thereby the strength of the coating film using the aqueous coating liquid and the adhesion to the collector are likely to be enhanced. From these viewpoints, the content of the PVA-based resin is more preferably 5% by mass or more, still more preferably 7% by mass or more. On the other hand, when the content of the PVA-based resin is 40% by mass or less, thereby the aqueous coating liquid is likely to be obtained as a uniform solution. From this viewpoint, the content of the PVA-based resin is more preferably 20% by mass or less, still more preferably 15% by mass or less.

### (Electrically Conductive Material)

The aqueous coating liquid contains an electrically conductive material. As the electrically conductive material, at least one carbon-based electrically conductive material selected from the group consisting of carbon black, carbon fibers, carbon nanotubes, graphite, and graphene is preferably used. As the carbon black, acetylene black, Ketjen black, furnace black, and the like can be used. As the carbon nanotube, any of single-walled carbon nanotubes and multiwalled carbon nanotubes can be used. By using the above-described electrically conductive materials, it can be expected that the electrical contact of the coating film using the aqueous coating liquid is improved more, the internal resistance of an active material layer is lowered, and the volume density of the active material layer is increased.

The content of the electrically conductive material in the aqueous coating liquid is preferably 0.1 to 30% by mass based on the total mass of the aqueous coating liquid. When the content of the electrically conductive material is 0.1% by mass or more, thereby the electric conductivity of the coating film using the aqueous coating liquid is likely to be enhanced. From this viewpoint, the content of the electrically conductive material is more preferably 2% by mass or more, still more preferably 4% by mass or more. On the other hand, when the content of the electrically conductive material is 30% by mass or less, thereby the content of the PVA-based resin and PBTC in the aqueous coating liquid is ensured, and therefore the performance, such as adhesion, of the coating film using the aqueous coating liquid is likely to be enhanced. From this viewpoint, the content of PBTC is more preferably 25% by mass or less, still more preferably 20% by mass or less.

### (2-Phosphonobutane-1,2,4-Tricarboxylic Acid)

The aqueous coating liquid contains 2-phosphonobutane-1,2,4-tricarboxylic acid (PBTC). In the present technique, salts of 2-phosphonobutane-1,2,4-tricarboxylic acid (PBTC) are included in "2-phosphonobutane-1,2,4-tricarboxylic acid (PBTC)." Examples of the salts of PBTC include alkali metal salts, such as a sodium salt and a potassium salt; an ammonium salt; and amine salts.

PBTC acts as a crosslinker that causes a crosslinking reaction with the PVA-based resin in the process of forming the coating film using the aqueous coating liquid and has a function of hardening the PVA-based resin. Therefore, the coating film using the aqueous coating liquid is hard to dissolve in organic solvents and electrolytic solutions and is hard to be swollen, so that the coating film using the aqueous coating liquid can exhibit excellent adhesion to metal materials and the collector and excellent solvent resistance. PBTC is available from the market as, for example, trade names "CHELEST PH-430," "CHELEST PH-435" (manufactured by CHELEST CORPORATION), and trade name "DEQUEST 7000" (Italmatch Chemicals S.p.A).

The content of PBTC in the aqueous coating liquid is preferably 0.2 to 20% by mass based on the total mass of the aqueous coating liquid. When the content of PBTC is 0.2% by mass or more, thereby the strength, adhesion to the collector, and electrochemical stability to electrolytic solutions of the coating film using the aqueous coating liquid are likely to be enhanced. From these viewpoints, the content of PBTC is more preferably 0.5% by mass or more, still more preferably 0.9% by mass or more. On the other hand, when the content of PBTC is 20% by mass or less, thereby a coating film having a moderate flexibility is likely to be formed, and the storage stability of the aqueous coating liquid is more likely to be enhanced. From these viewpoints, the content of PBTC is more preferably 10% by mass or less, still more preferably 5% by mass or less.

### (Ratio of Contents of Respective Components)

The ratio of the content (A) of the polyvinyl alcohol (PVA)-based resin in the aqueous coating liquid to the content (C) of 2-phosphonobutane-1,2,4-tricarboxylic acid (PBTC) in the aqueous coating liquid, (A/C), is 2 to 100, preferably 3 to 50. When the above-described ratio (A/C) is more than 100, the extent of crosslinking is insufficient, and a coating film having excellent water resistance is hard to form. On the other hand, when the above-described ratio (A/C) is less than 2, the flexibility of the coating film using the aqueous coating liquid is likely to be lowered, and the storage stability of the aqueous coating liquid is likely to be lowered. From the viewpoint of expectation of water resistance at high temperatures (for example, about 50 to about 100°C), the lower limit of the above-described ratio (A/C) is preferably 2.5 or more, more preferably 3 or more, still more preferably 4 or more, further still more preferably 6 or more, and the upper limit of the above-described ratio (A/C) is preferably 50 or less, more preferably 30 or less, still more preferably 15 or less, further still more preferably 9 or less.

The ratio of the content (A) of the polyvinyl alcohol (PVA)-based resin in the aqueous coating liquid to the content (B) of the electrically conductive material in the aqueous coating liquid, (A/B), is preferably 0.2 to 3.0, more preferably 0.3 to 2.7.

The ratio of the content (B) of the electrically conductive material to the total content ([A + B + C]) of the polyvinyl alcohol (PVA)-based resin, the electrically conductive material, and 2-phosphonobutane-1,2,4-tricarboxylic acid (PBTC) in the aqueous coating liquid, (B/[A + B + C]), is preferably 0.2 to 0.8. When the above-described ratio (B/[A + B + C]) is 0.2 or more, thereby the electric conductivity of the coating film using the aqueous coating liquid is likely to be sufficient. From the viewpoint of probability of making the surface resistivity of the coating film further lower, the above-described ratio (B/[A + B + C]) is more preferably 0.25 or more, still more preferably 0.3 or more. On the other hand, when the above-described ratio (B/[A + B + C]) is 0.8 or less, thereby the strength and adhesion to the collector of the coating film using the aqueous coating liquid are more likely to be enhanced, and the dispersion state of the electrically conductive material in the aqueous coating liquid is likely to be kept. From these viewpoints, the above-described ratio (B/[A + B + C]) is more preferably 0.7 or less.

Note that the electric conductive performance of the electrically conductive material and the viscosity of a dispersion of the electrically conductive material are different depending on the type of the electrically conductive material, and therefore it is preferable to determine the above-described ratios (A/B) and (B/[A + B + C]) appropriately by investigating the optimum ranges of the above-described ratios (A/B and B/[A + B + C]) according to the type of the electrically conductive material.

The aqueous coating liquid is, as one aspect thereof, preferably an aqueous coating liquid consisting of the above-described water-based medium, PVA-based resin, electrically conductive material, and PBTC, or is preferably an aqueous coating liquid containing a component other than the above-described water-based medium, PVA-based resin, electrically conductive material, and PBTC. The total content of the water-based medium, the PVA-based resin, the electrically conductive material, and PBTC in the aqueous coating liquid is preferably 50% by mass or more, more preferably 70% by mass or more, still more preferably 92% by mass or more, and further still more preferably 95% by mass or more, based on the total mass of the aqueous coating liquid.

As described above, the aqueous coating liquid may contain additional components, such as a resin (hereinafter, referred to as "additional resin,") other than the PVA-based resin, a polybasic acid (hereinafter, referred to as "additional polybasic acid") other than PBTC, and a crosslinker (hereinafter, referred to as "additional crosslinker"), if necessary. In addition, the above-described additional components may be added to the aqueous coating liquid at the time of using the aqueous coating liquid. However, the aqueous coating liquid needs to satisfy the condition that the aqueous coating liquid is free of polyacrylic acid, or that even when the aqueous coating liquid comprises polyacrylic acid, the content of the polyacrylic acid is less than 9% by mass based on the total mass of the aqueous coating liquid. In this condition, the aqueous coating liquid is more preferably free of polyacrylic acid, or even when the aqueous coating liquid contains polyacrylic acid, the content of polyacrylic acid is preferably 8% by mass or less, more preferably 5% by mass or less. Further, from the viewpoint of suppressing a viscosity increase of the aqueous coating liquid, resulting in easiness of coating and from the viewpoint of cutting production costs, the aqueous coating liquid more preferably contains neither polymaleic acid nor polyitaconic acid. The content of the additional components in the aqueous coating liquid is preferably 50% by mass or less, more preferably 30% or less, still more preferably 8% by mass or less, and further still more preferably 5% by mass or less, based on the total mass of the aqueous coating liquid.

Examples of the additional resin which may be contained in the aqueous coating liquid include: vinylpyrrolidone-based polymers, such as a homopolymer formed of vinylpyrrolidone as the constituent monomer (polyvinylpyrrolidone) and copolymers formed with vinylpyrrolidone as a constituent monomer; and chitosan-based polymers, such as chitosan and derivatives thereof. One of these may be used singly, or two or more of these may be used in combination. According to studies conducted by the present inventors, when the above-described additional resin is further contained in the aqueous coating liquid, thereby the following effects can be expected: the dispersibility of the electrically conductive material in the aqueous coating liquid can be improved; and the additional resin functions as an additional film-forming component, which thereby makes it possible to form a more excellent coating film. The content of the polyvinylpyrrolidone-based polymer and the chitosan-based polymer in the aqueous coating liquid is preferably 0.1 to 20% by mass based on the total mass of the aqueous coating liquid.

The copolymer formed with vinylpyrrolidone as a constituent monomer may be a copolymer of vinylpyrrolidone and a monomer (vinyl group-containing monomer) having a vinyl group copolymerizable with vinylpyrrolidone. The vinyl group-containing monomer is not particularly limited, and examples thereof include: acrylic acid; methacrylic acid; alkyl esters of acrylic acid, such as methyl acrylate and ethyl acrylate; alkyl esters of methacrylic acid, such as methyl methacrylate and ethyl methacrylate; aminoalkyl esters of acrylic acid, such as diethylaminoethyl acrylate; aminoalkyl esters of methacrylic acid, such as diethylaminoethyl methacrylate; monoesters of acrylic acid and a glycol, such as hydroxyethyl acrylate; monoesters of methacrylic acid and a glycol, such as hydroxyethyl methacrylate; alkali metal salts of acrylic acid; alkali metal salts of methacrylic acid; an ammonium salt of acrylic acid; an ammonium salt of methacrylic acid; quaternary ammonium derivatives of aminoalkyl esters of acrylic acid; quaternary ammonium derivatives of aminoalkyl esters of methacrylic acid; vinyl methyl ether; vinyl ethyl ether; vinyl acetate; N-vinylimidazole; N-vinylacetamide; N-vinylformamide; N-vinylcaprolactam; N-vinylcarbazole; acrylamide; methacrylamide; N-alkyl acrylamide; and N-methylol acrylamide.

Commercially available chitosan and chitosan derivatives can be used as served, but from the viewpoint of solubility to the water-based medium, chitosan derivatives are more preferred. Examples of the chitosan derivatives include hydroxyethyl chitosan, hydroxypropyl chitosan, hydroxybutyl chitosan, hydroxybutyl hydroxypropyl chitosan, carboxymethyl chitosan, succinyl chitosan, glycerolized chitosan, and cationized chitosan.

Examples of the additional polybasic acid which may be contained in the aqueous coating liquid include citric acid, 1,2,3-propanetricarboxylic acid, 1,2,4-butanetricarboxylic acid, trimellitic acid, 1,2,4-cyclohexanetricarboxylic acid, ethylenediaminetetraacetic acid, 1,2,3,4-butanetetracarboxylic acid, pyromellitic acid, 1,2,4,5-cyclohexanetetracarboxylic acid, 1,4,5,8-naphthalenetricarboxylic acid, 1,2,3,4,5,6-cyclohexanehexacarboxylic acid, isocitric acid, aconitic acid, nitrilotriacetic acid, hydroxyethylethylenediaminetriacetic acid, carboxyethyl thiosuccinic acid, trimesic acid, ethylenediamine N,N'-disuccinic acid, 1,4,5,8-naphthalenetetracarboxylic acid, pentenetetracarboxylic acid, hexenetetracarboxylic acid, N,N-di(carboxymethyl)glutamic acid, maleated methylcyclohexenetetracarboxylic acid, furantetracarboxylic acid, benzophenonetetracarboxylic acid, phthalocyanine tetracarboxylic acid, 1,2,3,4-cyclobutanetetracarboxylic acid, cyclopentanetetracarboxylic acid, bicyclo[2,2,1]heptane-2,3,5,6-tetracarboxylic acid, bicyclo[2,2,2]octane-2,3,5,6-tetracarboxylic acid, diethylenetriaminepentaacetic acid, phthalocyanine polycarboxylic acid, phytic acid, hexametaphosphoric acid, polyphosphonic acid, polymethacrylic acid, polyitaconic acid, polymaleic acid and copolymers of polymethacrylic acid, polyitaconic acid and polymaleic acid, styrene/maleic acid copolymers, isobutylene/maleic acid copolymers, vinyl ether/maleic acid copolymers, pectic acid, polyglutamic acid, polymalic acid, polyaspartic acid, and acrylic acid/maleic acid/vinyl alcohol copolymers.

Examples of the additional crosslinker which may be contained in the aqueous coating liquid include: bifunctional or more epoxy compounds, such as ethylene glycol diglycidyl ether, polyethylene glycol diglycidyl ether, and glycerol polyglycidyl ether; bifunctional or more isocyanate compounds such as tolylene diisocyanate, xylylene diisocyanate, hexamethylene diisocyanate, and phenyl diisocyanate; blocked isocyanate compounds in which bifunctional or more isocyanate compounds are blocked with a blocking agent, such as phenol or the like, alcohol or the like, active methylene or the like, mercaptan or the like, acid amide or the like, imide or the like, amine or the like, imidazole or the like, urea or the like, carbamic acid or the like, imine or the like, oxime or the like, and sulfurous acid or the like; bifunctional or more aldehyde compounds, such as glyoxal, glutaraldehyde, and dialdehyde starch.

In addition, examples of the additional crosslinker also include: bifunctional or more (meth)acrylate compounds, such as polyethylene glycol diacrylate, polyethylene glycol dimethacrylate, and hexanediol diacrylate; methylol compounds, such as methylol melamine and dimethylol urea; metal salts of organic acids, such as zirconyl acetate, zirconyl carbonate, and titanium lactate; and metal alkoxide compounds, such as aluminum trimethoxide, aluminum tributoxide, titanium tetraethoxide, titanium tetrabutoxide, zirconium tetrabutoxide, aluminum dipropoxide acetyl acetonate, titanium dimethoxide bis(acetylacetonate), and titanium dibutoxide bis(ethylacetoacetate).

Further, examples of the additional crosslinker also include: silane coupling agents, such as vinylmethoxysilane, vinylethoxysilane, 3-glycidoxypropyltrimethoxysilane, 3-glycidoxypropyltriethoxysilane, 3-methacryloxypropyltrimethoxysilane, 3-aminopropyltrimethoxysilane, 3-aminopropyltriethoxysilane, 3-isocyanatepropyltriethoxysilane, and imidazolesilane; and silane compounds, such as methyltrimethoxysilane, tetraethoxysilane, and methyltriethoxysilane; and carbodiimide compounds.

The solid content of the aqueous coating liquid is preferably 5 to 50% by mass, more preferably 5 to 40% by mass, still more preferably 10 to 35% by mass, based on the total mass of the aqueous coating liquid.

### (Method for Preparing Aqueous Coating Liquid and Characteristics of Aqueous Coating Liquid)

With regard to the method for preparing the aqueous coating liquid, the aqueous coating liquid can be prepared by mixing the above-described water-based medium, PVA-based resin, electrically conductive material, PBTC, and, if necessary, the additional components (the "additional resin," the "additional polybasic acid," the "additional crosslinker," and the like). Specifically, it is preferable to add the PVA-based resin, the electrically conductive material, PBTC, and, if necessary, the additional components to the water-based medium and mix the resultant mixture. In addition, it is preferable to determine the amount of each component to be blended so as to satisfy the above-described content (ratio) of each component in the aqueous coating liquid.

In preparing the aqueous coating liquid, when PBTC is used, commercially available PBTC can be used as served but, if necessary, the commercially available PBTC may be used after purification. In addition, when the PVA-based resin is used, it is preferable to preliminarily prepare a PVA-based resin solution by dissolving the PVA-based resin and PBTC in the water-based medium and then prepare the aqueous coating liquid using the PVA-based resin solution. In preparing the PVA-based resin solution, with regard to the order of addition to the water-based medium, any of the PVA-based resin and PBTC may be added to the water-based medium first, or the PVA-based resin and PBTC may be simultaneously added to the water-based medium. In dissolving the PVA-based resin and PBTC in the water-based medium, the resultant mixture may be stirred at normal temperature (20°C±15°C) or, if necessary, may be stirred under heating, and the mixture is preferably heated to 80°C or higher.

In mixing the components, a mixer is preferably used so that the respective components can be dispersed in the water-based medium. For example, a homogenizer, a bead mill, a ball mill, a sand mill, a roll mill, a planetary mixer, and the like can be used as the mixer. In addition, when the mixing is performed, it is also preferable to employ a method in which the electrically conductive material is first mixed with a mixer, such as a mixing and grinding machine, a planetary mixer, a Henschel mixer, and OM mixer, and, subsequently, the above-described PVA-based resin solution is added to mix the resultant mixture uniformly. By employing this method, a uniform aqueous coating liquid can easily be prepared.

The viscosity of the aqueous coating liquid at 25°C, as measured with a B-type rotary viscometer at a number of revolutions of 60 rpm with a rotor number 1 to 4 is preferably 100 to 10,000 mPa·s. The aqueous coating liquid can be prepared by the above-described method so as to have a viscosity within such a range.

It is preferable to process the aqueous coating liquid physically before applying the aqueous coating liquid. The physical processing is performed by processing the aqueous coating liquid before application by any of conventionally known physical processing methods. Examples of the physical processing method include processing methods using a bead mill, a ball mill, a sand mill, a disperser for pigments, a mixing and grinding machine, an ultrasonic disperser, a homogenizer, a planetary mixer, a Hobart mixer, and the like. For example, in the case of the processing method using a bead mill, dispersion treatment can be performed by filling zirconia beads (diameter 0.03 to 3 mm) in a ceramic vessel with a filling rate of 50 to 95% in batch-wise or continuously circulating-wise at a rotor peripheral speed of 5 to 20 m/s.

### (Characteristics of Coating Film)

The method for applying the aqueous coating liquid will be mentioned in the paragraphs of Electrode for Electricity Storage Apparatus, which will be described later, and the coating film formed using the aqueous coating liquid can have the characteristics as described below. Specifically, even when a dried coating film having a thickness of 4 µm is obtained by applying the aqueous coating liquid on an aluminum foil and then subjecting the applied aqueous coating liquid to thermal treatment at 200°C for 1 minute, and a water rubbing test is performed 2 hours after a waterdrop is dropped on to the dried coating film, the adhesion to the aluminum foil is preferably excellent.

In addition, the coating film preferably has a surface resistivity of 2000 Ω/□ or lower. The surface resistivity can be measured as follows: a coating film having a thickness of 4 µm is formed by applying the aqueous coating liquid on a glass plate so as to have a dry film thickness of 4 µm, thereafter, drying the applied aqueous coating liquid by heating at 200°C for 1 minute, followed by cooling to 30°C; and the surface resistivity of the coating film can be measured by the four-probe method specified in JIS K7194:1994.

### <Electrode for Electricity Storage Apparatus>

An electrode for an electricity storage apparatus of one embodiment of the present invention (hereinafter, sometimes simply referred to as "electrode for electricity storage apparatus") can be provided by using the above-described aqueous coating liquid. The electrode for an electricity storage apparatus includes a collector, an active material layer, and an undercoat layer provided between the collector and the active material layer. This undercoat layer is the above-described coating film of the aqueous coating liquid. The electrode for an electricity storage apparatus can be utilized as an electrode in electricity storage apparatuses including, for example, secondary batteries, such as a lithium ion secondary battery, a sodium ion secondary battery, a semi-solid lithium ion secondary battery, an all-solid-state lithium ion secondary battery, and a nickel-hydrogen secondary battery; capacitors, such as an electric double layer capacitor and a lithium ion capacitor; and the like.

The method for producing the electrode for an electricity storage apparatus is not particularly limited as long as the above-described undercoat layer which is a coating film formed from the aqueous coating liquid is provided between the collector and the active material layer. From the viewpoint of easiness of production, the aqueous coating liquid is preferably applied on the surface of the collector and dried to form a coating film to be used as the undercoat layer, and the active material layer can be provided on the coating film. If necessary, as described above, the additional components may be added to the aqueous coating liquid before being applied on the collector.

With regard to the method for applying the aqueous coating liquid, methods such as, for example, gravure coating, gravure reverse coating, roll coating, bar coating, Meyer bar coating, blade coating, knife coating, air knife coating, comma coating, slot die coating, slide die coating, and dip coating can be employed. The aqueous coating liquid can be applied in such a way that the dry thickness of the coating film preferably falls within a range of 0.1 to 10 µm, more preferably 0.1 to 5 µm, still more preferably 0.1 to 2 µm.

After the aqueous coating liquid is applied, the aqueous coating liquid is preferably dried by heating. The drying by heating can be carried out after the water-based medium in the aqueous coating liquid is removed by heating or while the water-based medium in the aqueous coating liquid is removed by heating. As conditions during the drying by heating, the temperature is preferably 100 to 250°C, and the drying time within the temperature range is preferably 1 second to 60 minutes. These conditions make it possible to crosslink the PVA-based resin with PBTC sufficiently and to form an undercoat layer (coating film) having more excellent adhesion to the collector and more excellent electrochemical stability against electrolytic solutions.

As described above, the undercoat layer (coating film) preferably has a surface resistivity of 2000 Ω/□ or lower, as measured by the above-described method. By applying the coating film having a surface resistivity of 2000 Ω/□ or lower to the electrode for an electricity storage apparatus, the internal resistance can be lowered, which makes it possible to obtain a highly efficient and long-life secondary battery or capacitor. From this viewpoint, the surface resistivity of the undercoat layer (coating film) is more preferably 1500 Ω/□ or lower, still more preferably 1000 Ω/□ or lower, and further still more preferably 500 Ω/□ or lower.

As the electrode for an electricity storage apparatus, any of positive electrodes and negative electrodes can be produced. In producing a positive electrode for an electricity storage apparatus, a positive electrode collector and a positive electrode active material layer can be used as the collector and the active material layer respectively. In producing a negative electrode for an electricity storage apparatus, a negative electrode collector and a negative electrode active material layer can be used as the collector and the active material layer respectively.

### (Collector)

Any of positive electrode collectors and negative electrode collectors which are used in secondary batteries and capacitors can be used as the collector in the electrode for an electricity storage apparatus. Examples of the positive electrode collectors include aluminum, tantalum, niobium, titanium, stainless steel, gold, platinum, hafnium, zirconium, zinc, tungsten, bismuth, and antimony. Among these, aluminum, which has excellent corrosion resistance against electrolytic solutions and is lightweight and easily machinable, is preferable as the positive electrode collector. Examples of the negative electrode collectors include metal foils, such as copper, stainless steel, aluminum foils, and among these, a copper foil is preferable. The thickness of the metal foil is preferably about 5 to about 30 µm, more preferably about 8 to about 25 µm. The surface of the collector can be treated in advance with a coupling agent, such as a silane-based coupling agent, a titanate-based coupling agent, and aluminum-based coupling agent.

### (Active Material Layer)

The active material layer in the electrode for an electricity storage apparatus can be formed with an electrode material slurry containing an active material (positive electrode active material or negative electrode active material), a binder resin, a solvent, and, if necessary, a conductive assistant and the like. The active material layer can be formed by applying this electrode material slurry on the above-described undercoat layer (coating film) provided on the surface of the collector. To improve the homogeneity of the active material layer more, it is also preferable to form the active material layer by subjecting the layer obtained by the application of the electrode material slurry to pressing. For example, a metal roll, a heating roll, and a sheet press machine can be used for the pressing. The pressing condition during the pressing is preferably in a range of 500 to 7,500 kgf/cm².

Any of positive electrode active materials and negative electrode active materials which are used in secondary batteries and capacitors can be used as the active material. Examples of the positive electrode active material for a lithium ion secondary battery include LiCoO₂, LiNiO₂, LiMn₂O₄, LiFeO₂, and LiFePO₄. Examples of the negative electrode active material for a lithium ion secondary battery include carbon materials such as graphite, a lithium metal, and Li-Al alloys. Examples of the positive electrode active material for a sodium ion secondary battery include sodium metal oxides, and examples of the negative electrode active material for a sodium ion secondary battery include graphite. Examples of the positive electrode active material for a nickel-hydrogen secondary battery include nickel hydroxide, and examples of the negative electrode active material for a nickel-hydrogen secondary battery include hydrogen storage alloys. Further, examples of the positive electrode active material and the negative electrode active material for an electric double layer capacitor include an activated carbon powder.

Examples of the binder resin which can be used for the electrode material slurry for forming the active material layer include polyvinylidene fluoride, polytetrafluoroethylene, acrylic resins, polyimide resins, polyamide-imide resins, silicone acrylic resins, and styrene/butadiene copolymer rubber, and one, or two or more of the binder resins can be used. In addition, examples of the solvent which can be used for the electrode material slurry include the above-described polar solvents (for example, water and N-methyl-2-pyrrolidone) which can be used for the aqueous coating liquid, and one, or two or more of the polar solvents can be used. Further, examples of the conductive assistant which is contained, if necessary, in the electrode material slurry include carbon black, such as acetylene black, Ketjen black, and furnace black; carbon nanotubes; and a graphite powder, and one, or two or more of those can be used.

As described above, the electrode for an electricity storage apparatus is, as one aspect thereof, also preferably a positive electrode for an electricity storage apparatus, wherein the collector is an aluminum foil, and the active material layer contains a positive electrode active material. In addition, the electrode for an electricity storage apparatus is, as one aspect thereof, also preferably a negative electrode for an electricity storage apparatus, wherein the collector is a copper foil, and the active material layer contains a negative electrode active material. Further, the electrode for an electricity storage apparatus is, as one aspect thereof, also preferably an electrode for an electricity storage apparatus, wherein the collector is an aluminum foil, and the active material layer contains an activated carbon powder.

### <Electricity Storage Apparatus>

The present technique can provide an electricity storage apparatus including the above-described electrode for an electricity storage apparatus. Examples of the electricity storage apparatus include: secondary batteries, such as a lithium ion secondary battery, a sodium ion secondary battery, a semi-solid lithium ion secondary battery, an all-solid lithium ion secondary battery, and a nickel-hydrogen secondary battery; and capacitors, such as an electric double layer capacitor and lithium ion capacitor. Hereinafter, the secondary batteries and the capacitors will be separately described.

### (Secondary Batteries)

A second battery of one embodiment of the present invention includes the above-described electrodes (positive electrode and negative electrode) for an electricity storage apparatus, a separator, and an electrolytic solution. By using these, the secondary batteries, such as a lithium ion secondary battery, a sodium ion secondary battery, a semi-solid lithium ion secondary battery, an all-solid lithium ion secondary battery, and a nickel-hydrogen secondary battery, can be produced according to the usual methods. For example, in producing a lithium ion secondary battery, a nonaqueous electrolytic solution obtained by dissolving a lithium salt which is a solute (electrolyte) in an organic solvent or an ionic liquid is used as the electrolytic solution. For example, inorganic lithium salts, such as LiClO₄, LiBF₄, LiPF₆, LiAsF₆, LiCl, and LiBr; organic lithium salts, such as LiB(C₆H₅)₄, LiN(SO₂CF₃)₂, LiC(SO₂CF₃)₃, LiOSO₂CF₃, LiOSO₂C₂F₅, LiOSO₂C₃F₇, LiOSO₂C₄F₉, LiOSO₂C₅F₁₁, LiOSO₂C₆F₁₃, and LiOSO₂C₇F₁₅; and the like are used as the lithium salt which is a solute that forms the nonaqueous electrolytic solution.

Examples of the organic solvent which can be used for the electrolytic solution include cyclic esters, chain esters, cyclic ethers, and chain ethers. Examples of the cyclic esters include ethylene carbonate, propylene carbonate, butylene carbonate, γ-butyrolactone, vinylene carbonate, 2-methyl-γ-butyrolactone, acetyl-γ-butyrolactone, and γ-valerolactone. Examples of the chain esters include dimethyl carbonate, diethyl carbonate, dibutyl carbonate, dipropyl carbonate, methyl ethyl carbonate, methyl butyl carbonate, methyl propyl carbonate, ethyl butyl carbonate, ethyl propyl carbonate, butyl propyl carbonate, propionic acid alkyl esters, malonic acid dialkyl esters, and acetic acid alkyl esters. Examples of the cyclic ethers include tetrahydrofuran, alkyl tetrahydrofuran, dialkyl alkyl tetrahydrofuran, alkoxy tetrahydrofuran, dialkoxy tetrahydrofuran, 1,3-dioxolane, alkyl-1,3-dioxolane, and 1,4-dioxolane. Examples of the chain ethers include 1,2-dimethoxyethane, 1,2-diethoxyethane, diethyl ether, ethylene glycol dialkyl ether, diethylene glycol dialkyl ether, triethylene glycol dialkyl ether, and tetraethylene glycol dialkyl ether.

The ionic liquid which can be used for the electrolytic solution is a liquid consisting of ions of a combination of an organic cation and an anion. For example, at least one of dialkyl imidazolium cations, such as 1-ethyl-3-methylimidazolium ion; trialkyl imidazolium cations, such as 1,2-dimethyl-3-propylimidazolium ion; tetraalkyl ammonium ions, such as dimethyl-ethyl-methoxy-ammonium ion; alkyl pyridinium ions, such as 1-butylpyridinium ion; dialkyl pyrrolidinium ions such as methyl-propyl-pyrrolidinium ion; and dialkyl piperidinium ions, such as methyl-propyl-piperidinium ion, can be used as the organic cation.

As the anion which forms a pair with the organic cation, AlCl₄⁻, PF₆⁻, PF₃(C₂F₅)₃⁻, PF₃(CF₃)₃⁻, BF₄⁻, BF₂(CF₃)₂⁻, BF₃(CF₃)⁻, CF₃SO₃⁻ (TfO; triflate anion), (CF₃SO₂)₂N- (TFSI; trifluoromethanesulfonyl), (FSO₂)₂N⁻ (FSI; fluorosulfonyl), (CF₃SO₂)₃C⁻ (TFSM), and the like can be used. Note that the other constituents of the battery are the same as the batteries of conventional techniques.

### (Capacitors)

A capacitor of one embodiment of the present invention include the above-described electrodes (positive electrodes and negative electrodes) for an electricity storage apparatus, a separator, and an electrolytic solution. By using these, the capacitors, such as an electric double layer capacitor and a lithium ion capacitor, can be produced according to the usual methods. Specifically, the capacitor can be produced by, for example, stacking the electrodes for an electricity storage apparatus through the separator; putting the electrodes into a container by winding or bending the electrodes or by other methods according to the shape of the capacitor; pouring the electrolytic solution into the container; and sealing the container.

The electrolytic solution which can be used in producing a capacitor is not particularly limited, but a nonaqueous electrolytic solution obtained by dissolving an electrolyte in an organic solvent is preferable. For example, as an electrolyte for an electric double layer capacitor, any of the conventionally known electrolytes for an electric double layer capacitor can be used, and examples thereof include tetraethylammonium tetrafluoroborate, triethyl-monomethyl-ammonium tetrafluoroborate, and tetraethylammonium hexafluorophosphate. Further, examples of the electrolyte for a lithium ion capacitor includes lithium salts, such as LiI, LiClO₄, LiAsF₆, LiBF₄, and LiPF₆.

The solvent for dissolving the above-described electrolyte (the solvent for the electrolytic solution) is also not particularly limited as long as it is generally used as a solvent for an electrolytic solution. Specific examples of the solvent include: carbonates, such as propylene carbonate, ethylene carbonate, and butylene carbonate; lactones, such as γ-butyrolactone; sulfolanes; and nitriles, such as acetonitrile, and these can be used singly or as a mixed solvent of two or more thereof. Among others, carbonates are preferable because the withstand voltage is high. The concentration of the electrolytic solution is usually 0.5 mol/L or higher, preferably 0.8 mol/L or higher.

As the separator, it is possible to use any of known separators including: microporous membranes or nonwoven fabrics made of a polyolefin, such as polyethylene and polypropylene; porous membranes made of pulp as the main raw material, which are generally called electrolytic condenser paper; and the like. In addition, the separator may be formed by dispersing an inorganic ceramic powder and a resin binder in a solvent, applying the resultant dispersion on an electrode layer, and drying the applied dispersion. A solid electrolyte or a gel electrolyte may be used in place of the separator. In addition, with regard to the other materials such as a container, any of the materials which are used for an ordinary capacitor can be used.

The uses, composition, and the like of the aqueous coating liquid of one embodiment of the present invention are described in detail above, and the aqueous coating liquid of one embodiment of the present invention has excellent storage stability and makes it possible to form a coating film having excellent water resistance between a collector and an active material layer in an electrode for an electricity storage apparatus. In addition, this aqueous coating liquid makes it possible to form a coating film exhibiting excellent adhesion to the collector and also exhibiting low contact resistance and makes it possible to form a coating film having excellent solvent resistance (electrolytic solution resistance). Further, this coating film makes it possible to achieve excellent adhesion between the collector and the active material layer and also makes it possible to lower the internal resistance, so that improvements in the cycle characteristics of an electricity storage apparatus can also be expected.

Note that the constituents in the above-described embodiment of the present invention can also be appropriately combined and utilized. For example, the above-described embodiment of the present invention can also take the following compositions and configurations.
[1] An aqueous coating liquid for forming a coating film to be provided between a collector and an active material layer in an electrode for an electricity storage apparatus, the aqueous coating liquid containing:
   a water-based medium comprising water;
   at least one polyvinyl alcohol-based resin selected from the group consisting of unmodified polyvinyl alcohols and modified polyvinyl alcohols obtained by introducing a functional group other than a hydroxy group and an acetate group into an unmodified polyvinyl alcohol;
   an electrically conductive material; and
   2-phosphonobutane-1,2,4-tricarboxylic acid, wherein
   the aqueous coating liquid satisfies a condition that the aqueous coating liquid is free of polyacrylic acid, or that even when the aqueous coating liquid comprises polyacrylic acid, the content of the polyacrylic acid is less than 9% by mass based on the total mass of the aqueous coating liquid, and
   a ratio of the content of the polyvinyl alcohol-based resin in the aqueous coating liquid to the content of 2-phosphonobutane-1,2,4-tricarboxylic acid in the aqueous coating liquid is 2 to 100.
[2] The aqueous coating liquid according to [1], wherein a ratio of the content of the polyvinyl alcohol-based resin in the aqueous coating liquid to the content of the electrically conductive material in the aqueous coating liquid is 0.2 to 3.0.
[3] The aqueous coating liquid according to [1] or [2], wherein a ratio of the content of the electrically conductive material to the total content of the polyvinyl alcohol-based resin, the electrically conductive material, and 2-phosphonobutane-1,2,4-tricarboxylic acid in the aqueous coating liquid is 0.2 to 0.8.
[4] The aqueous coating liquid according to any one of [1] to [3], wherein a ratio of the content of the polyvinyl alcohol-based resin in the aqueous coating liquid to the content of 2-phosphonobutane-1,2,4-tricarboxylic acid in the aqueous coating liquid is 3 to 50.
[5] The aqueous coating liquid according to any one of [1] to [4], wherein
   the unmodified polyvinyl alcohol has an average molecular weight of lower than 80,000, as determined by (average degree of polymerization) × (formula weight of structural units of constituent monomers),
   the modified polyvinyl alcohol has an average molecular weight of lower than 80,000, as determined as an average molecular weight of the unmodified polyvinyl alcohol before introducing the functional group.
[6] The aqueous coating liquid according to any one of [1] to [5], wherein the electrically conductive material contains at least one selected from the group consisting of carbon black, carbon fibers, carbon nanotubes, graphite, and graphene.
[7] The aqueous coating liquid according to any one of [1] to [6], comprising neither polymaleic acid nor polyitaconic acid.
[8] An electrode for an electricity storage apparatus, the electrode including:
   a collector;
   an active material layer; and
   an undercoat layer provided between the collector and the active material layer, wherein
   the undercoat layer is a coating film of the aqueous coating liquid according to any one of [1] to [7].
[9] An electricity storage apparatus including the electrode for an electricity storage apparatus according to [8].

### Examples

Hereinafter, the present invention will specifically be described based on Examples, but the present invention is not limited to these Examples. Note that "parts" and "%" described below are each on a mass basis unless otherwise noticed.

### <Preparation of Polymer Solution>

Polymer solutions of Preparation Examples 1 to 20 were each prepared by mixing the components (unit: part) shown in Table 1. The total amount of the components in the polymer solution shown in Table 1 is 100 parts, and therefore the use amount (parts) of each component is synonymous with the content (%) of each component based on the total mass of the polymer solution. In Table 1, "PVA" represents polyvinyl alcohol, "PBTC" represents 2-phosphonobutane-1,2,4-tricarboxylic acid. In addition, "MeOH" represents methanol, "EtOH" represents ethanol, and "IPA" represents isopropyl alcohol (2-propanol). "Water/MeOH = 8/2," "Water/EtOH = 9/1," and "Water/IPA = 8/2" each used as the water-based medium represent a water-based medium obtained by mixing water and MeOH in a mass ratio of water:MeOH = 8:2, water and EtOH in a mass ratio of water:EtOH = 9:1, and water and IPA in a mass ratio of water:IPA = 8/2, respectively.

### (Preparation Example 1)

To 85 parts of ion exchanged water, 12 parts of an unmodified PVA (trade name "Kuraray Poval 28-98 (former trade name PVA-117)," manufactured by Kuraray Co., Ltd.; also used in Preparation Examples 3,6,and 15 to 17, described below) whose degree of saponification and average degree of polymerization are 99 mol% and 1,700, respectively, and 3 parts of PBTC were added, and then the resultant mixture was stirred at 95°C for 2 hours to prepare 100 parts of the polymer solution.

### (Preparation Examples 2 to 18)

The polymer solutions of Preparation Examples of 2 to 18 were each prepared by the same method as in Preparation Example 1 except that the type and use amount (parts) of the PVA-based resin, the use amount (parts) of PBTC, and the type and use amount (parts) of the water-based medium were changed respectively as shown in Table 1. Note that in Preparation Examples 8 and 13, an unmodified PVA (trade name "Kuraray Poval 9-88 (former trade name PVA-210)," manufactured by Kuraray Co., Ltd.) whose degree of saponification and average degree of polymerization are 88 mol% and 1,000, respectively, was used. Kuraray Poval series manufactured by Kuraray Co., Ltd. were also used in Preparation Examples 2, 4, 5, 7, 9, 10, 14, and 18. In Preparation Example 11, a silanol-modified PVA (trade name "Kuraray Poval R-1130," manufactured by Kuraray Co., Ltd.) whose degree of saponification and average degree of polymerization are 98 mol% and 1,300, respectively, was used. In Preparation Example 12, an acetoacetyl group-modified PVA (trade name "GOHSENX Z-100," manufactured by Mitsubishi Chemical Corporation) whose degree of saponification and average degree of polymerization are 99 mol% and 500, respectively, was used.

### (Preparation Example 19)

A polymer solution of Preparation Example 19 was prepared by the same method as in Preparation Example 1 except that 10 parts of an unmodified PVA (trade name "Kuraray Poval 22-88 (former trade name PVA-217)," manufactured by Kuraray Co., Ltd.) whose degree of saponification and average degree of polymerization are 88 mol% and 1,700, respectively, 2 parts of PBTC, 25 parts (10 parts in terms of polyacrylic acid which is a solid component) of a polyacrylic acid aqueous solution (trade name "JURYMER AC-10L," manufactured by TOAGOSEI CO., LTD.; solid content 40%, Mw 25,000), and 63 parts (78 parts in total, including the water in the polyacrylic acid aqueous solution) of ion exchanged water were used.

### (Preparation Example 20)

Prepared was 100 parts of a PVDF solution by the same method as in Preparation Example 1 except that 8 parts of polyvinylidene fluoride (hereinafter, referred to as "PVDF") and 92 parts of N-methyl-2-pyrrolidone (hereinafter, referred to as "NMP") were used.

**Table 1: Compositions of polymer solutions of Preparation Examples 1 to 20**

| Preparation Example No. | Polymer | | | | | PBTC | Polyacrylic acid | Water-based medium | |
|---|---|---|---|---|---|---|---|---|---|
| | Type | Degree of saponification (mol%) | Average degree of polymerization | ^{*1} Average molecular weight | Parts | Parts | - | Type | Parts |
| 1 | Unmodified PVA | 99 | 1700 | 75600 | 12 | 3 | - | Water | 85 |
| 2 | Unmodified PVA | 99 | 500 | 22200 | 14 | 1 | - | Water | 85 |
| 3 | Unmodified PVA | 99 | 1700 | 75600 | 10 | 5 | - | Water | 85 |
| 4 | Unmodified PVA | 99 | 1000 | 44500 | 11 | 4 | - | Water | 85 |
| 5 | Unmodified PVA | 99 | 500 | 22200 | 15 | 0.5 | - | Water | 84 .5 |
| 6 | Unmodified PVA | 99 | 1700 | 75600 | 10 | 0.1 | - | Water | 89.9 |
| 7 | Unmodified PVA | 95 | 1700 | 78500 | 12 | 3 | - | Water/MeOH=8/2 | 85 |
| 8 | Unmodified PVA | 88 | 1000 | 49100 | 14 | 1 | - | Water/EtOH = 9/1 | 85 |
| 9 | Unmodified PVA | 80 | 1700 | 89200 | 10 | 5 | - | Water/IPA=8/2 | 85 |
| 10 | Unmodified PVA | 74 | 500 | 27500 | 10 | 5 | - | Water | 85 |
| 11 | Silanol-modified PVA | 98 | 1300 | 58400^{*2} | 10 | 2 | - | Water | 88 |
| 12 | Acetoacetyl group-modified PVA | 99 | 500 | 22200^{*2} | 12 | 3 | - | Water | 85 |
| 13 | Unmodified PVA | 88 | 1000 | 49100 | 10.5 | 1.5 | - | Water | 88 |
| 14 | Unmodified PVA | 99 | 500 | 22200 | 15 | - | - | Water | 85 |
| 15 | Unmodified PVA | 99 | 1700 | 75600 | 10 | 6 | - | Water | 84 |
| 16 | Unmodified PVA | 99 | 1700 | 75600 | 7.5 | 7.5 | - | Water | 85 |
| 17 | Unmodified PVA | 99 | 1700 | 75600 | 5 | 10 | - | Water | 85 |
| 18 | Unmodified PVA | 99 | 500 | 22200 | 15 | 0.1 | - | Water | 84 . 9 |
| 19 | Unmodified PVA | 88 | 1700 | 83500 | 10 | 2 | 10 | Water | 78 |
| 20 | PVDF | - | - | - | 8 | - | - | NMP | 92 |

| | | | | | | | | | |
|---|---|---|---|---|---|---|---|---|---|
| *1: Average molecular weight determined by (average degree of polymerization) × (formula weight of structural units of constituent monomers) *2: Calculated value as average molecular weight of unmodified PVA before introducing functional group | | | | | | | | | |

### <Preparation of Electrically Conductive Coating Liquid>

Electrically conductive coating liquids of Examples 1 to 17 and Comparative Examples 1 to 7 as aqueous coating liquids were each prepared by mixing the polymer solution (unit: part) and electrically conductive material (unit: part) shown in Table 2.

"AB" shown in Table 2 represents acetylene black (trade name "DENKA BLACK HS-100," manufactured by Denka Company Limited), "Graphite" represents scale-like graphite (trade name "FT-2," manufactured by Fuji Graphite Works Co., Ltd.), "KB" represents Ketjen black (trade name "ECP600JD," manufactured by Lion Corporation), "FB" represents furnace black (trade name "#3050B," manufactured by Mitsubishi Chemical Corporation), and "CNT" represents a carbon nanotube (multiwalled carbona nanotube, diameter 40 to 60 nm, length 1 to 2 µm; manufactured by Tokyo Chemical Industry Co., Ltd.).

In addition, "Ratio (A/C)" shown in Table 2 represents the ratio of the content (A) of the PVA-based resin in the electrically conductive coating liquid to the content (C) of PBTC in the electrically conductive coating liquid. Similarly, "Ratio (A/B)" represents the ratio of the content (A) of the PVA-based resin in the electrically conductive coating liquid to the content (B) of the electrically conductive material in the electrically conductive coating liquid. Further, "Ratio (B/[A + B + C])" represents the ratio of the content (B) of the electrically conductive material to the total content ([A + B + C]) of the PVA-based resin, the electrically conductive material, and PBTC in the electrically conductive coating liquid.

### (Example 1)

The electrically conductive coating liquid of Example 1 was obtained by mixing 10 parts of acetylene black (hereinafter, sometimes referred to as "AB") as the electrically conductive material and 90 parts of the polymer solution of Preparation Example 1 with a planetary mixer under conditions of a number of revolutions of 60 rpm and a stirring time of 120 minutes. The viscosity of the obtained electrically conductive coating liquid was measured with a B-type rotary viscometer (25°C, 60 rpm, rotor No. 4) to find that the viscosity was 3360 mPa·s, and the solid content was 23.5%.

The obtained electrically conductive coating liquid was applied with a comma roll coater on one surface of a substrate which is a collector composed of an aluminum foil having a thickness of 20 µm. Thereafter, the water-based medium was removed and the polymer component (PVA-based resin) was crosslinked through drying for 2 minutes in an oven set at 110°C and further drying for 2 minutes in an oven set at 180°C, and thus a coating film having a dry film thickness of 1 µm was formed on the collector.

### (Examples 2 to 17 and Comparative Examples 1 to 7)

The electrically conductive coating liquids of Examples 2 to 17 and Comparative Examples of 1 to 7 were each obtained by the same method as in Example 1 except that the type and use amount (parts) of the polymer solution and the type and use amount (parts) of the electrically conductive material were respectively set as shown in Table 2. Then, the viscosity (25°C, 60 rpm, the rotor for measurement was appropriately selected and used according to the viscosity) of each electrically conductive coating liquid was measured. Further, coating films were prepared using the electrically conductive coating liquids respectively by the same method as in Example 1. Note that in the electrically conductive coating liquid of Comparative Example 6, wherein 90 parts of the polymer solution of Preparation Example 19 and 10 parts of AB were blended, the content of polyacrylic acid is 9% and the total content of the water-based medium, the PVA-based resin, the electrically conductive material, and PBTC is 91%, based on the total mass of the electrically conductive coating liquid.

**Table 2: Compositions and characteristics of electrically conductive coating liquids**

| | Polymer solution | | Electrically conductive material | | Viscosity (mPa·s) | Solid content (%) | Ratio (A/C) | Ratio (A/B) | Ratio (B/[A+B+C]) |
|---|---|---|---|---|---|---|---|---|---|
| | Preparation Example | Parts | Type | Parts | | | | | |
| Example 1 | 1 | 90 | AB | 10 | 3360 | 23.5 | 4 | 1.08 | 0.43 |
| Example 2 | 2 | 88 | AB | 12 | 1920 | 25.2 | 14 | 1.03 | 0.48 |
| Example 3 | 3 | 90 | AB | 10 | 3140 | 23.5 | 2 | 0.90 | 0.43 |
| Example 4 | 4 | 87 | AB | 13 | 2310 | 26.1 | 2.75 | 0.74 | 0.50 |
| Example 5 | 5 | 85 | AB | 15 | 2590 | 28.2 | 30 | 0.85 | 0.53 |
| Example 6 | 6 | 90 | AB | 10 | 1880 | 19.1 | 100 | 0.90 | 0.52 |
| Example 7 | 7 | 92 | AB | 8 | 2190 | 21.8 | 4 | 1.38 | 0.37 |
| Example 8 | 8 | 90 | AB | 10 | 1630 | 23.5 | 14 | 1.26 | 0.43 |
| Example 9 | 9 | 90 | AB | 10 | 2250 | 23.5 | 2 | 0.90 | 0.43 |
| Example 10 | 10 | 88 | AB | 12 | 1170 | 25.2 | 2 | 0.73 | 0.48 |
| Example 11 | 11 | 89 | AB | 11 | 1720 | 21.7 | 5 | 0.81 | 0.51 |
| Example 12 | 12 | 85 | AB | 15 | 2310 | 27.8 | 4 | 0.68 | 0.54 |
| Example 13 | 4 | 78 | Graphite | 22 | 1930 | 33.7 | 2.75 | 0.39 | 0.65 |
| Example 14 | 13 | 68 | Graphite | 32 | 2350 | 40.2 | 7 | 0.22 | 0.80 |
| Example 15 | 4 | 96 | KB | 4 | 1560 | 18.4 | 2.75 | 2.64 | 0.22 |
| Example 16 | 4 | 90 | FB | 10 | 2680 | 23.5 | 2.75 | 0.99 | 0.43 |
| Example 17 | 4 | 96 | CNT | 4 | 1340 | 18.4 | 2.75 | 2.64 | 0.22 |
| Comparative Example 1 | 14 | 90 | AB | 10 | 1090 | 23.5 | - | 1.35 | 0.43 |
| Comparative Example 2 | 15 | 90 | AB | 10 | 1670 | 24.4 | 1.67 | 0.90 | 0.41 |
| Comparative Example 3 | 16 | 90 | AB | 10 | 1120 | 23.5 | 1 | 0.68 | 0.43 |
| Comparative Example 4 | 17 | 90 | AB | 10 | 830 | 23.5 | 0.5 | 0.45 | 0.43 |
| Comparative Example 5 | 18 | 90 | AB | 10 | 1280 | 23.5 | 150 | 1.35 | 0.42 |
| Comparative Example 6 | 19 | 90 | AB | 10 | 4380 | 29.8 | 5 | 0.90 | 0.48 |
| Comparative Example 7 | 20 | 95 | AB | 5 | 3270 | 12.6 | - | - | - |

### <Evaluations>

The storage stability of each electrically conductive coating liquid produced in the manner as described above and the adhesion, dissolution/swelling characteristic (solvent resistance), water resistance, and surface resistivity (Ω/□) of each coating film produced as described above were evaluated by the following methods.

### (Storage Stability of Electrically Conductive Coating Liquid)

In a 100 mL plastic container, 100 g of the electrically conductive coating liquid was placed to seal the container tightly, and then the container was stored in a thermostatic chamber set at 50°C for 3 months. Thereafter, the plastic container in which the electrically conductive coating liquid was placed was taken out of the thermostatic chamber. The evaluation of the electrically conductive coating liquid was performed as follows: when the fluidity of the electrically conductive coating liquid in the container was kept and the application of the electrically conductive coating liquid with a bar coater was possible, the storage stability of the electrically conductive coating liquid was rated as "good," and when viscosity increase or gelation occurred to lower the fluidity and the application of the electrically conductive coating liquid with a bar coater was impossible, the storage stability of the electrically conductive coating liquid was rated as "poor." The results are shown in Table 3.

### (Adhesion of Coating Film)

On the coating film, parallel lines were drawn at intervals of 1 mm with a cutter in such a way that 11 parallel lines and 11 parallel lines were orthogonal to one another, and thus 100 squares were formed in 1 cm². A mending tape was adhered to this surface, and then the tape was peeled to determine the number of squares which were not peeled off, which was regarded as a measure of the adhesion of the coating film to the collector. This test was conducted 10 times to determine the average value in the ten tests. The results are shown in Table 3.

### (Dissolution/Swelling Characteristic of Coating Film)

The coating film on which the above-described squares had been formed was immersed in the solution described below at 70°C for 72 hours, and then the state of the coating film was visually observed. When there was no change in the state of the coating film, the dissolution/swelling characteristic (solvent resistance) of the coating film was rated as "good," and when the coating film layer was peeled off or swollen, the dissolution/swelling characteristic (solvent resistance) of the coating film was rated as "poor." The results are shown in Table 3. As the above-described solution, there was used a solution obtained by dissolving 1 mol of LiPF₆ as a supporting electrolyte in a mixed solvent of EC (ethylene carbonate):PC (propylene carbonate):DME (dimethoxyethane) = 1:1:2 in a volume ratio.

### (Water Resistance of Coating Film)

The electrically conductive coating liquid was applied on an aluminum foil (JIS H 4160) with a bar coater, and then the applied electrically conductive coating liquid was dried for 1 minute in an oven set at 200°C to form a coating film having a dry film thickness of 4 µm. Subsequently, 1 mL of pure water was dropped onto the resultant coating film to leave the coating film to stand still at room temperature (about 23°C) for 2 hours, and then the part where the pure water had been dropped was wiped with a cellulose wiper (trade name "BEMCOT," manufactured by Asahi Kase Corp.). When the coating film after the wiping with the wiper was not peeled off, the water resistance of the coating film was rated as "good," and when the coating film was peeled off, the water resistance of the coating film was rated as "poor." The results are shown in Table 3.

### (Surface Resistivity of Coating Film)

The electrically conductive coating liquid was applied on a glass plate with a bar coater, and then the applied coating liquid was dried for 1 minute in an oven set at 200°C to form an electrically coating film having a dry film thickness of 4 µm. Subsequently, the surface resistivity (Ω/□) of the resultant coating film was determined by the four-probe method according to the specification of JIS K7194:1994. The surface resistivity was measured with "Loresta-GP, MCP-T610," (trade name) manufactured by Mitsubishi Chemical Analytech Co., Ltd. (now, Nittoseiko Analytech Co., Ltd.) under conditions of a temperature of 25°C and a relative humidity of 60%. The measurement results are shown in Table 3.

**Table 3: Results of evaluations of electrically conductive liquids and results of evaluations of coating films**

| | Storage stability of electrically conductive coating liquid | Adhesion (average value) of coating film | Dissolution/swelling characteristic of coating film | Water resistance of coating film | Surface resistivity (Ω/□) of coating film |
|---|---|---|---|---|---|
| Example 1 | Good | 100 | Good | Good | 600 |
| Example 2 | Good | 100 | Good | Good | 525 |
| Example 3 | Good | 100 | Good | Good | 575 |
| Example 4 | Good | 100 | Good | Good | 500 |
| Example 5 | Good | 100 | Good | Good | 475 |
| Example 6 | Good | 100 | Good | Good | 525 |
| Example 7 | Good | 100 | Good | Good | 775 |
| Example 8 | Good | 100 | Good | Good | 650 |
| Example 9 | Good | 100 | Good | Good | 575 |
| Example 10 | Good | 100 | Good | Good | 500 |
| Example 11 | Good | 100 | Good | Good | 525 |
| Example 12 | Good | 100 | Good | Good | 475 |
| Example 13 | Good | 98 | Good | Good | 925 |
| Example 14 | Good | 96 | Good | Good | 1025 |
| Example 15 | Good | 100 | Good | Good | 850 |
| Example 16 | Good | 100 | Good | Good | 725 |
| Example 17 | Good | 100 | Good | Good | 825 |
| Comparative Example 1 | Good | 95 | Good | Poor | 675 |
| Comparative Example 2 | Poor | 100 | Good | Good | 700 |
| Comparative Example 3 | Poor | 100 | Good | Poor | 575 |
| Comparative Example 4 | Poor | 100 | Good | Poor | 600 |
| Comparative Example 5 | Good | 98 | Good | Poor | 650 |
| Comparative Example 6 | Poor | 100 | Good | Good | 875 |
| Comparative Example 7 | Good | 87 | Poor | Good | 800 |

### <Example 18>

### (Preparation of Positive Electrode>

A positive electrode solution containing a positive electrode active material was prepared by the following method. As the materials of the positive electrode solution, 90 parts of LiCoO₂ powder having a particle size of 1 to 100 µm, 5 parts of acetylene black as a conductive assistant, 50 parts of a 5% NMP solution of polyvinylidene fluoride as a binder resin (PVDF solution) were stirred and mixed with a planetary mixer at a number of rotations of 60 rpm for 120 minutes, and thereby the positive electrode solution in the form of slurry, containing the positive electrode active material, was obtained.

The positive electrode solution obtained above was applied on the surface of the coating film of Example 1 with a comma roll coater, and then the solvent was removed through drying for 2 minutes in an oven set at 110°C and further drying for 2 minutes in an oven set at 180°C to form an active material layer having a dry film thickness of 100 µm on the coating film, and thus a positive electrode composite layer was obtained. The positive electrode composite layer obtained by the above method was pressed under a condition of 5,000 kgf/cm² to make the film uniform. Subsequently, volatile components (such as the solvent and water) were sufficiently removed through aging for 48 hours in a vacuum oven set at 80°C to obtain a positive electrode.

### (Preparation of Negative Electrode)

The coating liquid of Example 1 was applied with a comma roll coater on one surface of substrate which is a copper foil collector. Thereafter, the solvent was removed and the PVA-based resin in the coating liquid was crosslinked through drying for 2 minutes in an oven set at 110°C and further drying for 2 minutes in an oven set at 180°C, and thus a coating film having a dry film thickness of 1 µm was formed on the collector.

Subsequently, a negative electrode solution containing a negative electrode active material was prepared by the following method. As the materials of the negative electrode solution, 90 parts of a carbon powder obtained through pyrolysis of coal coke at 1,200°C, 5 parts of acetylene black as a conductive assistant, 50 parts of a 5% NMP solution of polyvinylidene fluoride as a binder resin (PVDF solution) were stirred and mixed with a planetary mixer at a number of rotations of 60 rpm for 120 minutes, and thereby the negative electrode solution in the form of slurry, containing the negative electrode active material, was obtained.

The negative electrode solution obtained above was applied on the surface of the coating film of Example 1, which was on the surface of the copper foil collector, with a comma roll coater, and then the solvent was removed through drying for 2 minutes in an oven set at 110°C and further drying for 2 minutes in an oven set at 180°C to form an active material layer having a dry film thickness of 100 µm on the coating film, and thus a negative electrode composite layer was obtained. The negative electrode composite layer obtained by the above method was pressed under a condition of 5,000 kgf/cm² to make the film uniform. Subsequently, volatile components (such as the solvent and water) were sufficiently removed through aging for 48 hours in a vacuum oven set at 80°C to obtain a negative electrode.

### (Secondary Battery)

Firstly, an electrode body was formed by spirally winding the positive electrode and negative electrode obtained above interposing a separator composed of a polyolefin-based (polypropylene, polyethylene, or a copolymer thereof) porous film having a larger width than the positive electrode and having a three-dimensional pore structure (spongiform structure). Subsequently, this electrode body was inserted in a stainless steel container also functioning as a negative electrode terminal and having a bottomed cylindrical shape to assemble a secondary battery with AA size and a rated capacity of 500 mAh. Into this secondary battery, a solution obtained by dissolving 1 mol of LiPF₆ as a supporting electrolyte in 1 L of a mixed solvent of EC (ethylene carbonate):PC (propylene carbonate):DME (dimethoxyethane) = 1:1:2 in a volume ratio was poured as an electrolytic solution.

A charging/discharging measurement apparatus was used for measuring the battery characteristics, and the charging/discharging characteristic was measured for 20 cells repeating charging/discharging 100 cycles under the same condition wherein one cycle includes: charging to a battery voltage of 4.1 V at a charging current of 0.2 CA and a temperature of 25°C followed by a halt of the charging for 10 minutes; and discharging to 2.75V at the same current, followed by a halt of the discharging for 10 minutes. The value of charging/discharging capacity at the 100th cycle assuming the value of charging/discharging capacity at the first cycle to be 100 (charging/discharging capacity retention rate) was 99%.

### <Examples 19 to 24 and Comparative Example 8>

A positive electrode, a negative electrode, and a secondary battery were prepared to measure the charging/discharging characteristic by the same methods as in Example 18 except that the coating film and coating liquid shown in Table 4 below were used in place of the coating film and coating liquid of Example 1, which were used for the preparation of the positive electrode and negative electrode used in Example 18. The results are shown in Table 4.

**Table 4: Conditions of preparation of positive electrodes and negative electrodes, and results of evaluations of secondary batteries**

| | Coating film used for preparation of positive electrode plate | Coating liquid used for preparation of negative electrode plate | Charging/discharging capacity retention rate |
|---|---|---|---|
| Example 18 | Coating film of Example 1 | Coating film of Example 1 | 99% |
| Example 19 | Coating film of Example 2 | Coating film of Example 2 | 98% |
| Example 20 | Coating film of Example 3 | Coating film of Example 3 | 98% |
| Example 21 | Coating film of Example 4 | Coating film of Example 4 | 99% |
| Example 22 | Coating film of Example 5 | Coating film of Example 5 | 98% |
| Example 23 | Coating film of Example 7 | Coating film of Example 7 | 97% |
| Example 24 | Coating film of Example 8 | Coating film of Example 8 | 99% |
| Comparative Example 8 | Coating film of Comparative Example 5 | Coating film of Comparative Example 5 | 81% |

### <Example 25>

### (Capacitor)

The coating liquid of Example 1 was applied with a comma roll coater on one surface of a substrate which is a collector composed of an aluminum foil having a thickness of 20 µm. Thereafter, the solvent was removed and the PVA-based resin in the coating liquid was crosslinked through drying for 2 minutes in an oven set at 110°C and further drying for 2 minutes in an oven set at 180°C, and thus a coating film having a dry film thickness of 0.5 µm was formed on the collector.

Subsequently, an electrode solution containing an active material was prepared by the following method. As the materials of the electrode solution, 100 parts of a high-purity activated carbon powder having a specific surface area of 1,500 cm²/g and an average particle size of 10 µm and 8 parts of acetylene black as a conductive assistant were charged into a planetary mixer; an NMP solution of polyvinylidene fluoride was added thereto to make the concentration of all the solid components 45%; and the resultant mixture was mixed for 60 minutes. Thereafter, the resultant solution was diluted with NMP to make the concentration of the solid components 42%, and the resultant solution was further mixed for 10 minutes to obtain the electrode solution. This electrode solution was applied on the above-described coating film layer with a doctor blade, and the applied electrode solution was dried with a blower dryer at 80°C for 30 minutes. Thereafter, the dried product was pressed with a roll press machine to obtain an electrode for a capacitor, the electrode having a thickness of 80 µm and a density of 0.6 g/cm³.

The electrode for a capacitor, which was produced above, was cut out into two pieces of circular electrodes each having a diameter of 15 mm, and the circular electrodes were dried at 200°C for 20 hours. The active material layer surfaces of these two electrodes were made to face each other to interpose a circular separator having a diameter of 18 mm and a thickness of 40 µm and made of cellulose therebetween. This was housed in a stainless steel coin-shaped outer container (diameter 20 mm, height 1.8 mm, thickness of stainless steel 0.25 mm) provided with a packing made of polypropylene. An electrolytic solution was poured into this container so as not to leave the air inside, and a stainless steel cap having a thickness of 0.2 mm was put and fixed on the outer container interposing a packing made of polypropylene therebetween to seal the container, and thus a coin-type capacitor having a diameter of 20 mm and a thickness of about 2 mm was produced. Note that as the electrolytic solution, a solution obtained by dissolving tetraethylammonium tetrafluoroborate in propylene carbonate at a concentration of 1 mol/L was used. The capacitance and internal resistance of the capacitor thus obtained were measured, and the measurement results are shown in Table 5.

### <Examples 26 to 30>

Electrodes and capacitors were prepared by the same methods as in Example 25 except that the coating liquids shown in Table 5 below were used in place of the coating liquid of Example 1 used in Example 25, and each of the characteristics was evaluated. The results are shown in Table 5.

### <Comparative Example 9>

Electrodes and a capacitor were prepared by the same methods as in Example 25 except that the coating liquid of Comparative Example 5 was used in place of the coating liquid of Example 1 used in Example 25, and each of the characteristics was evaluated. The results are shown in Table 5.

The internal resistance and capacitance in Table 5 below were measured and evaluated as follows. The capacitance and internal resistance of the obtained capacitors were measured at a current density of 20 mA/cm² and evaluated according to the following evaluation criteria using the results of Comparative Example 9 as the standard. The larger the capacitance, the better the performance as a capacitor, and the smaller the internal resistance, the better the performance as a capacitor.

### (Criteria for Evaluating Capacitance)

A: The capacitance is larger than that in Comparative Example 9 by 20% or more.
B: The capacitance is larger than that in Comparative Example 9 by 10% or more and less than 20%.
C: The capacitance is equal or inferior to that in Comparative Example 9.

### (Criteria for Evaluating Internal Resistance)

A: The internal resistance is smaller than that in Comparative Example 9 by 20% or more.
B: The internal resistance is smaller than that in Comparative Example 9 by 10% or more and less than 20%.
C: The internal resistance is equal or inferior to that in Comparative Example 9.

**Table 5: Preparation and evaluations of capacitors**

| | Coating liquid used for preparation of electrode plate for electricity storage apparatus | Capacitance | Internal resistance |
|---|---|---|---|
| Example 25 | Coating liquid of Example 1 | B | B |
| Example 26 | Coating liquid of Example 2 | B | B |
| Example 27 | Coating liquid of Example 3 | B | B |
| Example 28 | Coating liquid of Example 4 | A | A |
| Example 29 | Coating liquid of Example 5 | A | A |
| Example 30 | Coating liquid of Example 6 | B | B |
| Comparative Example 9 | Coating liquid of Comparative Example 5 | - | - |

From the results of Examples and Comparative Examples above, it was ascertained that when electrodes are prepared using, as coating films, the aqueous coating liquids (electrically conductive coating liquids) which are each one embodiment of the present invention, and capacitors are produced using the electrodes, capacitors each having a large capacitance and a small internal resistance can be produced.

## Claims

1. An aqueous coating liquid for forming a coating film to be provided between a collector and an active material layer in an electrode for an electricity storage apparatus, the aqueous coating liquid comprising:
a water-based medium comprising water;
at least one polyvinyl alcohol-based resin selected from the group consisting of unmodified polyvinyl alcohols and modified polyvinyl alcohols obtained by introducing a functional group other than a hydroxy group and an acetate group into an unmodified polyvinyl alcohol;
an electrically conductive material; and
2-phosphonobutane-1,2,4-tricarboxylic acid, wherein
the aqueous coating liquid satisfies a condition that the aqueous coating liquid is free of polyacrylic acid, or that even when the aqueous coating liquid comprises polyacrylic acid, the content of the polyacrylic acid is less than 9% by mass based on the total mass of the aqueous coating liquid, and
a ratio of the content of the polyvinyl alcohol-based resin in the aqueous coating liquid to the content of 2-phosphonobutane-1,2,4-tricarboxylic acid in the aqueous coating liquid is 2 to 100.

2. The aqueous coating liquid according to claim 1, wherein a ratio of the content of the polyvinyl alcohol-based resin in the aqueous coating liquid to the content of the electrically conductive material in the aqueous coating liquid is 0.2 to 3.0.

3. The aqueous coating liquid according to claim 1 or 2, wherein a ratio of the content of the electrically conductive material to the total content of the polyvinyl alcohol-based resin, the electrically conductive material, and 2-phosphonobutane-1,2,4-tricarboxylic acid in the aqueous coating liquid is 0.2 to 0.8.

4. The aqueous coating liquid according to any one of clams 1 to 3, wherein a ratio of the content of the polyvinyl alcohol-based resin in the aqueous coating liquid to the content of 2-phosphonobutane-1,2,4-tricarboxylic acid in the aqueous coating liquid is 3 to 50.

5. The aqueous coating liquid according to any one of claims 1 to 4, wherein
the unmodified polyvinyl alcohol has an average molecular weight of lower than 80,000, as determined by (average degree of polymerization) × (formula weight of structural units of constituent monomers),
the modified polyvinyl alcohol has an average molecular weight of lower than 80,000, as determined as an average molecular weight of the unmodified polyvinyl alcohol before introducing the functional group.

6. The aqueous coating liquid according to any one of claims 1 to 5, wherein the electrically conductive material comprises at least one selected from the group consisting of carbon black, carbon fibers, carbon nanotubes, graphite, and graphene.

7. The aqueous coating liquid according to any one of claims 1 to 6, comprising neither polymaleic acid nor polyitaconic acid.

8. An electrode for an electricity storage apparatus, the electrode comprising:
a collector;
an active material layer; and
an undercoat layer provided between the collector and the active material layer, wherein
the undercoat layer is a coating film of the aqueous coating liquid according to any one of claims 1 to 7.

9. An electricity storage apparatus comprising the electrode for an electricity storage apparatus according to claim 8.
